# EUROPÄISCHE PATENTSCHRIFT

(11) **EP 1 740 877 B1**
(45) Veröffentlichungstag und Bekanntmachung des Hinweises auf die Patenterteilung: **26.12.2007**
(21) Anmeldenummer: 05733878.2
(22) Anmeldetag: 19.04.2005
(51) Int. Cl.: F16L 47/03

(54) **SCHELLE AUS THERMISCH SCHWEISSFÄHIGEM MATERIAL**
CLAMP MADE OF A THERMALLY WELDABLE MATERIAL
BRIDE EN MATERIAU THERMOSOUDABLE

(30) Priorität: 27.04.2004 DE 102004020758
(43) Veröffentlichungstag der Anmeldung: 10.01.2007
(73) Patentinhaber: Henry Technologies GmbH, 36457 Stadtlengsfeld (DE)
(72) Erfinder: TAPPE, Michael, 40221 Düsseldorf (DE)
(74) Vertreter: Hofmeister, Frank
(86) Internationale Anmeldenummer: PCT/EP2005/004123
(87) Internationale Veröffentlichungsnummer: WO 2005/106313

(56) Entgegenhaltungen:
- DE-C1- 19 623 353
- DE-U1- 29 616 864
- GB-A- 808 725
- US-A- 3 987 276
- US-B1- 6 364 367

## Beschreibung

Die Erfindung betrifft eine Schelle aus thermisch schweißfähigem Material für ebenfalls aus einem schweißfähigen Material bestehende Rohrleitungen, mit zwei Segmenten, die im zusammengesetzten Zustand die Rohrleitung vollumfänglich umschließen und über einander zugekehrte Anlageflächen aneinander festlegbar sind, sowie mit einer, mit mindestens einem Heizleiter versehenen Heizvorrichtung, die fest mit der Innenfläche mindestens eines Segments verbunden ist.

Zum Verbinden von Kunststoffrohrleitungen, zum nachträglichen Anschließen von Rohrabgängen sowie zu Reparaturzwecken ist es bekannt, mit einer Heizvorrichtung versehene Schellen aus thermisch schweißfähigem Material zu verwenden. Die aus zwei Segmenten bestehende Schelle wird auf die zu bearbeitende Rohrleitung aufgesetzt und die beiden Segmente miteinander verbunden. Anschließend wird die Heizvorrichtung bestromt und über den in ihr verlegten Heizleiter so aufgeheizt, dass die beiden Segmente der Schelle miteinander und mit der Rohrleitung eine stoffschlüssige Schweißverbindung eingehen.

Um im Bereich der beiden aneinander anliegenden Anlageflächen der Schellensegmente eine mediendichte Schweißverbindung zu gewährleisten, ist es aus der DE 196 23 353 C1 bekannt, die Innenflächen beider Segmente jeweils mit einer Heizvorrichtung zu versehen. Die Heizvorrichtungen sind dabei so ausgebildet, dass die Heizvorrichtungen die Anlageflächen mit abwechselnden voneinander beabstandeten Zähnen überragen und diese Zähne Aufnahme in korrespondierenden Lücken des jeweils anderen Segments finden. Zwar ermöglichen diese bekannten Schellen eine mediendichte Schweißverbindung, jedoch ist die Ausbildung der in beiden Segmenten angeordneten Heizvorrichtungen mit der gegenseitigen Verzahnung sehr aufwendig und somit teuer.

Auch Dokument US 3987276 zeigt eine gattungsgemäße Schelle nach dem Oberbegriff des Anspruchs 1.

Davon ausgehend liegt der Erfindung die **Aufgabe** zugrunde, eine Schelle der eingangs genannten Art zu schaffen, die bei einfachem Aufbau eine mediendichte Verbindung mit der Rohrleitung gewährleistet.

Die **Lösung** dieser Aufgabenstellung ist erfindungsgemäß dadurch gekennzeichnet, dass die Heizvorrichtung im Montagezustand ausschließlich mit der Innenfläche nur eines Segments fest verbunden ist und die Heizvorrichtung die Anlageflächen dieses Segments beidseitig in Richtung des anderen Segments überragt.

Die erfindungsgemäße Anordnung der Heizvorrichtung in nur einem Segment der Schelle stellt eine deutliche Vereinfachung der Herstellung und Handhabung dar. Dadurch, dass die Heizvorrichtung die Anlageflächen beidseitig überragt, wird eine mediendichte Schweißverbindung der Schellensegmente im zusammengesetzten Zustand gewährleistet. Hierzu überragt die Heizvorrichtung die Anlageflächen beidseitig um mindestens 20°.

Gemäß einer bevorzugten Ausführungsform der Erfindung wird vorgeschlagen, dass die Heizvorrichtung im Montagezustand mindestens 70%, vorzugsweise 80% bis 90%, des Umfangs der Rohrleitung umspannt.

Um Platz für das aufschmelzende Material der das erste Segment überragenden Bereiche der Heizvorrichtung zu schaffen, sind in der Innenfläche des nicht mit der Heizvorrichtung versehenen zweiten Segments im wesentlichen der Dicke der Heizvorrichtung entsprechende Rücksprünge zur Aufnahme der das erste Segment überragenden Bereiche der Heizvorrichtung ausgebildet.

Gemäß einer praktischen Ausführungsform der Erfindung wird vorgeschlagen, dass an dem mit der Heizvorrichtung versehenen Segment ein Rohrabgang ausgebildet ist, wobei in der Heizvorrichtung eine zumindest dem Innendurchmesser des Rohrabgangs entsprechende Aussparung ausgebildet ist. Aufgrund der guten Mediendichtigkeit der Schweißverbindung ist es möglich, den Innendurchmesser des Rohrabgangs so zu wählen, dass dieser dem Innendurchmesser der mit der Schelle versehenen Rohrleitung entspricht.

Weiterhin wird mit der Erfindung vorgeschlagen, dass an den einander zugewandten Anlageflächen der Segmente Zentriervorrichtungen ausgebildet sind. Diese Zentriervorrichtungen, die auch die Abdichtung im Bereich der Anlageflächen erhöhen, sind vorzugsweise als Vorsprünge und korrespondierende Ausnehmungen zur Aufnahme der Vorsprünge an der jeweils gegenüberliegenden Anlagefläche ausgebildet.

Schließlich wird mit der Erfindung vorgeschlagen, dass die Heizvorrichtung aus einem elastischen Kunststoffmaterial, insbesondere einem thermoplastischen Material, besteht. Die Elastizität des Heizvorrichtungsmaterials ist vorteilhaft, um die Heizvorrichtung zum Aufsetzen auf eine Rohrleitung aufbiegen zu können.

Weitere Merkmale und Vorteile der Erfindung ergeben sich anhand der zugehörigen Zeichnung, in der ein Ausführungsbeispiel einer erfindungsgemäßen Schelle aus thermisch schweißfähigem Material nur beispielhaft dargestellt ist. In der Zeichnung zeigt:
- Fig. 1: eine schematische Seitenansicht einer erfindungsgemäßen Schelle im geöffneten Zustand;
- Fig. 2: eine schematische Seitenansicht der Schelle gemäß Fig. 1 im eine Rohrleitung umschließenden zusammengesetzten Zustand und
- Fig. 3: eine schematische Draufsicht auf eine Heizvorrichtung.

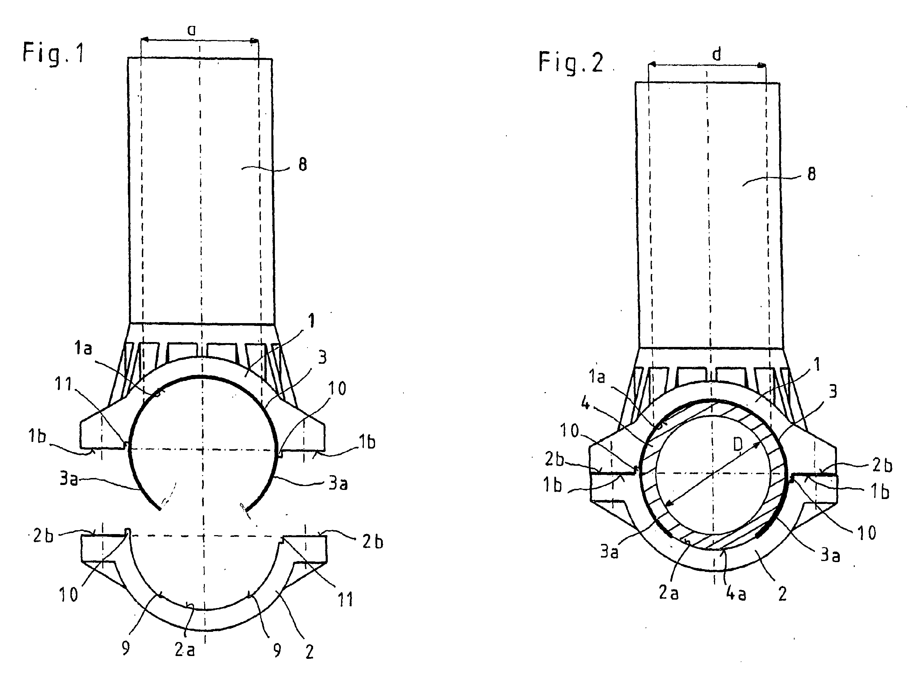

Die in den Abbildungen Fig. 1 und Fig. 2 dargestellte Schelle aus thermisch schweißfähigem Material für ebenfalls aus einem schweißfähigen Material bestehende Rohrleitungen besteht im wesentlichen aus zwei Segmenten 1 und 2, nämlich dem oberen Segment 1 und dem unteren Segment 2, sowie einer Heizvorrichtung 3, die fest mit Innenfläche 1a des oberen Segments 1 verbunden ist. Selbstverständlich ist es auch möglich, die Heizvorrichtung 3 fest mit der Innenfläche 2a des unteren Segments 2 zu verbinden.

Bei der dargestellten Ausführungsform sind beide Segmente 1 und 2 als im Querschnitt halbkreisförmige Segmente 1 und 2 ausgebildet. Zum Aufsetzen der einzelnen Segmente 1 und 2 auf eine fertig verlegte Rohrleitung ist dies die einzig mögliche Ausgestaltungsform. Wenn jedoch die Möglichkeit oder Notwendigkeit besteht, die Segmente 1 und 2 der Schelle auf eine Rohrleitung aufzuschieben, kann ein Segment 1 oder 2 der Schelle auch eine Querschnittsform aufweisen, die die Halbkreisform überschreitet, beispielsweise einen Dreiviertelkreis. Das jeweils andere Segment 2 oder 1 weist dann einen entsprechen verkleinerten Umschlingungsgrad auf, damit die beiden zusammengefügten Segmente 1 und 2 im montierten Zustand eine Rohrleitung 4 vollumfänglich umschließen, wie dies in Fig. 2 dargestellt ist.

Wie weiterhin aus Fig. 1 und 2 ersichtlich, weisen beide Segmente 1 und 2 beidseitig flanschförmige Anlageflächen 1b und 2b auf, über die die beiden Segmente 1 und 2 im montierten Zustand fest aneinander anliegen und miteinander verschraubt werden können. Alternativ oder zusätzlich zur Verschraubung ist es auch möglich, die flanschförmigen Anlageflächen 1b und 2b beispielsweise durch Verklemmen druckdicht miteinander zu verbinden.

Bei der dargestellten Ausführungsform sind die Segmente 1 und 2 als vollständig voneinander trennbare, separate Segmente 1 und 2 ausgebildet. Alternativ besteht jedoch auch die Möglichkeit, die beiden Segmente 1 und 2 entlang einer der flanschartigen Anlageflächen 1b und 2b über eine Scharnierverbindung verschwenkbar aneinander festzulegen.

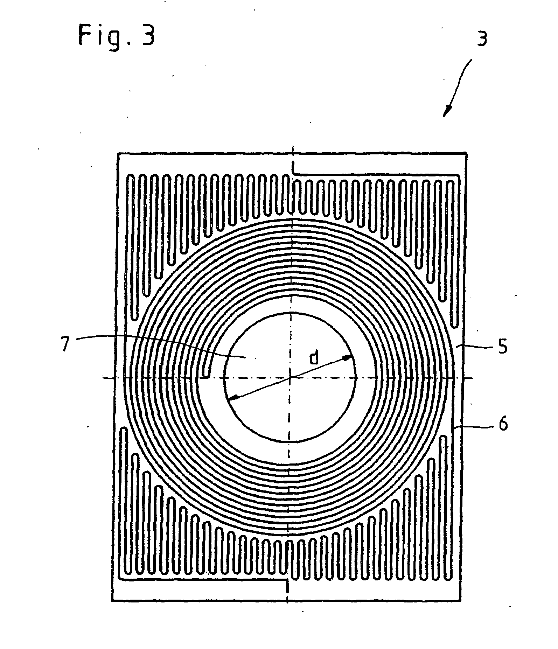

Die an der Innenfläche 1a des oberen Segments 1 festgelegte Heizvorrichtung 3 besteht, wie aus Fig. 3 ersichtlich, aus einem in diesem Fall rechteckigen Grundkörper 5, auf dem zumindest einseitig mindestens ein Heizleiter 6 angeordnet ist. Die dargestellte Heizvorrichtung 3 weist im Grundkörper 5 eine zentrale Aussparung 7 auf, da das obere Segment 1 mit einem Rohrabgang 8 versehen ist. Der Durchmesser d der Aussparung 7 entspricht dabei mindestens dem Innendurchmesser d des Rohrabgangs 8.

Das Festlegen der Heizvorrichtung 3 an der Innenfläche 1a des oberen Segments 1 erfolgt beim Herstellen des oberen Segments 1. Die fertige Heizvorrichtung 3 wird in eine Spritzform eingelegt und nachfolgend das obere Segment 1 auf die Heizvorrichtung 3 aufgespritzt.

Wie aus den Abbildungen Fig. 1 und 2 ersichtlich, ist die Heizvorrichtung 3 so dimensioniert, dass die Heizvorrichtung 3 die Anlageflächen 1b des oberen Segments 1 beidseitig in Richtung des unteren Segments 2 überragt, wobei die die Anlageflächen 1b überragenden Bereiche 3a der Heizvorrichtung 3 die Anlageflächen um jeweils mindestens 20° überragen. Vorteilhafterweise ist die Heizvorrichtung 3 so ausgebildet, dass sie, wie aus Fig. 2 ersichtlich, im Montagezustand mindestens 70%, vorzugsweise 80% bis 90%, des Umfangs der Rohrleitung 4 umspannt. Selbstverständlich sind auch 100% überschreitende Umschlingungen möglich, bei denen sich die die Anlageflächen 1b überragenden Bereiche 3a der Heizvorrichtung 3 gegenseitig überlappen.

Zur Aufnahme der die Anlageflächen 1b überragenden Bereiche 3a der Heizvorrichtung 3 sind in der Innenfläche 2a des unteren Segments 2 im wesentlichen der Dicke der Heizvorrichtung 3 entsprechende Rücksprünge 9 zur Aufnahme eben dieser Bereiche 3a der Heizvorrichtung 3 so ausgebildet, dass die Schelle im zusammengesetzten Zustand eine Innenfläche mit einem über den gesamten Umfang gleichen Durchmesser aufweist.

Um einerseits das Zusammenfügen der beiden Segmente 1 und 2 zu erleichtern, andererseits aber auch die Dichtigkeit der Schelle zu verbessern, sind an den einander zugewandten Anlageflächen 1b und 2b der Segmente 1 und 2 Zentriervorrichtungen ausgebildet. Diese Zentriervorrichtungen sind bei der dargestellten Ausführungsform als Vorsprünge 10 und korrespondierende Ausnehmungen 11 zur Aufnahme der Vorsprünge 10 an der jeweils gegenüberliegenden Anlagefläche 1 b, 2b ausgebildet.

Eine solchermaßen ausgebildete Schelle aus einem thermisch schweißfähigen Material für eine ebenfalls aus einem schweißfähigen Material bestehende Rohrleitung 4 wird wie folgt verwendet:
Die in den Abbildungen Fig. 1 und 2 dargestellte Schelle wird verwendet, um eine Rohrleitung 4 nachträglich mit einem Rohrabgang 8 zu versehen. Hierzu ist am oberen Segment 1 der Schelle der Rohrabgang 8 angeformt. Zum Aufsetzen des mit der Heizvorrichtung 3 versehenen oberen Segments 1 auf die Rohrleitung 4 werden die die Anlageflächen 1b des oberen Segments 1 überragenden Bereiche 3a der Heizvorrichtung 3 nach außen gebogen und anschließend das obere Segment 1 der Schelle auf die Rohrleitung 4 aufgesetzt. Da der Grundkörper 5 der Heizvorrichtung 3 vorzugsweise aus einem elastischen Kunststoffmaterial, insbesondere einem thermoplastischen Material, besteht, lassen sich die Bereiche 3a einfach und ohne bleibende Verformung aufbiegen.

Im zweiten Schritt wird das untere Segment 2 so auf die Rohrleitung 4 aufgesetzt, dass die Vorsprünge 10 und Ausnehmungen 11 der an den einander zugewandten Anlageflächen 1b und 2b der Segmente 1 und 2 ausgebildeten Zentriervorrichtungen ineinander greifen und die überlappenden Bereiche 3a der Heizvorrichtung 3 Aufnahme in den Rücksprüngen 9 der Innenfläche 2a des unteren Segments 2 finden. Anschließend werden die beiden solchermaßen lagegenau zueinander positionierten Segmente 1 und 2 druckdicht miteinander verschraubt.

Nachfolgend wird der mindestens eine Heizleiter 6 der Heizvorrichtung 3 bestromt. Das Aufheizen des Heizleiters 6 führt dazu, dass nicht nur der Grundkörper 5 der Heizvorrichtung 3, sondern auch die mit der Heizvorrichtung 3 in Kontakt stehenden Innenflächen 1a und 2a der Segmente 1 und 2 und die Mantelfläche 4a der Rohrleitung 4 aufgeschmolzen werden und nach dem anschließenden Erkalten eine stoffschlüssige und mediendichte Schweißverbindung bilden.

Durch die Ausbildung der die Anlageflächen 1 b des oberen Segments 1 der Schelle deutlich überragenden Bereiche 3a der Heizvorrichtung 3 ist es möglich, den Innendurchmesser d des Rohrabgangs 8 so zu wählen, dass dieser dem Innendurchmesser D der Rohrleitung 4 entspricht. Die die Kontaktebene der beiden Segmente 1 und 2 weit überlappenden Bereiche 3a der Heizvorrichtung 3 gewährleisten die mediendichte Verschweißung der beiden Segmente 1 und 2 im Bereich der durch die aneinander anliegenden Anlageflächen 1b und 2b gebildeten Kontaktebene.

Eine solchermaßen ausgebildete Schelle zeichnet sich dadurch aus, dass diese bei einfachem konstruktivem Aufbau eine mediendichte Verbindung mit der Rohrleitung 4 gewährleistet und darüber hinaus das Anformen von Rohrabgängen 8 mit einem großen Innendurchmesser d ermöglicht.

### Bezugszeichenliste

- 1: oberes Segment
- 1 a: Innenfläche
- 1 b: Anlagefläche
- 2: unteres Segment
- 2a: Innenfläche
- 2b: Anlagefläche
- 3: Heizvorrichtung
- 3a: überstehender Bereich
- 4: Rohrleitung
- 4a: Mantelfläche
- 5: Grundkörper
- 6: Heizleiter
- 7: Aussparung
- 8: Rohrabgang
- 9: Rücksprung
- 10: Vorsprung
- 11: Ausnehmung

- d: Innendurchmesser
- D: Innendurchmesser

## Patentansprüche

1. Schelle aus thermisch schweißfähigem Material für ebenfalls aus einem schweißfähigen Material bestehende Rohrleitungen (4), mit zwei Segmenten (1, 2), die im zusammengesetzten Zustand die Rohrleitung (4) vollumfänglich umschließen und über einander zugekehrte Anlageflächen (1b, 2b) aneinander festlegbar sind, sowie mit genan einer mit mindestens einem Heizleiter (6) versehenen Heizvorrichtung (3), die fest mit der Innenfläche (1a) eines Segments (1) verbunden ist, wobei
die Heizvorrichtung (3) im geöffneten Zustand ausschließlich mit der Innenfläche (1a) nur eines ersten Segments (1) fest verbunden ist **dadurch gekennzeichnet, dass** die Heizvorrichtung (3) die Anlageflächen (1b) dieses Segments (1) im geöffneten Zustand beidseitig In Richtung des anderen, zweiten Segments (2) überragt.

2. Schelle nach Anspruch 1, **dadurch gekennzeichnet, dass** die Heizvorrichtung (3) die Anlageflächen (1b) beidseitig um mindestens 20° überragt.

3. Schelle nach Anspruch 1 oder 2, **dadurch gekennzeichnet, dass** die Heizvorrichtung (3) im geöffneten Zustand mindestens 70%, vorzugsweise 80% bis 90%, des Umfangs der Rohrleitung (4) umspannt.

4. Schelle nach mindestens einem der Ansprüche 1 bis 3, **dadurch gekennzeichnet, dass** in der Innenfläche (2a) des nicht mit der Heizvorrichtung (3) versehenen zweiten Segments (2) im wesentlichen der Dicke der Heizvorrichtung (3) entsprechende Rücksprünge (9) zur Aufnahme der das erste Segment (1) überragenden Bereiche (3a) der Heizvorrichtung (3) ausgebildet sind.

5. Schelle nach mindestens einem der Ansprüche 1 bis 4, **dadurch gekennzeichnet, dass** an dem mit der Heizvorrichtung (3) versehenen Segment (1) ein Rohrabgang (8) ausgebildet ist, wobei in der Heizvorrichtung (3) ein zumindest dem Innendurchmesser (d) des Rohrabgangs (8) entsprechende Aussparung (7) ausgebildet ist.

6. Schelle nach Anspruch 5, **dadurch gekennzeichnet, dass** der Innendurchmesser (d) des Rohrabgangs (8) in etwa dem Innendurchmesser (D) der Rohrleitung (4) entspricht.

7. Schelle nach mindestens einem der Ansprüche 1 bis 4, **dadurch gekennzeichnet, dass** an den einander zugewandten Anlageflächen (1b, 2b) der Segmente (1, 2) Zentriervorrichtungen ausgebildet sind.

8. Schelle nach Anspruch 7, **dadurch gekennzeichnet, dass** die Zentriervorrichtungen als Vorsprünge (10) und korrespondierende Ausnehmungen (11) zur Aufnahme der Vorsprünge (10) an der jeweils gegenüberliegenden Anlagefläche (1b, 2b) ausgebildet sind.

9. Schelle nach mindestens einem der Ansprüche 1 bis 8, **dadurch gekennzeichnet, dass** die Heizvorrichtung (3) aus einem elastischen Kunststoffmaterial, insbesondere einem thermoplastischen Material, besteht.

## Claims

1. Clamp composed of thermally weldable material for pipelines (4) which are likewise composed of a weldable material, having two segments (1, 2) which, in the assembled state, completely surround the pipeline (4) and can be fixed to one another by means of contact faces (1b, 2b) which face towards one another, and also having one heating device (3) which is provided with at least one heat conductor (6) and which is fixedly connected to the inner face (1a) of a segment (1), with the heating device (3), in the open state, being fixedly connected only to the inner face (1a) of a first segment (1), **characterized in that** the heating device (3) projects at both sides beyond the contact faces (1b) of said segment (1) in the direction of the other, second segment (2).

2. Clamp according to Claim 1, **characterized in that** the heating device (3) projects at both sides beyond the contact faces (1b) by at least 20°.

3. Clamp according to Claim 1 or 2, **characterized in that** the heating device (3), in the open state, encompasses at least 70%, preferably 80% to 90%, of the periphery of the pipeline (4).

4. Clamp according to at least one of Claims 1 to 3, **characterized in that** the inner face (2a) of the second segment (2) which is not provided with the heating device (3) has formed in it recesses (9), which correspond substantially to the thickness of the heating device (3), for holding those regions (3a) of the heating device (3) which project beyond the first segment (1).

5. Clamp according to at least one of Claims 1 to 4, **characterized in that** a pipe outlet (8) is formed on the segment (1) which is provided with the heating device (3), with a cutout (7) which corresponds at least to the inner diameter (d) of the pipe outlet (8) being formed in the heating device (3).

6. Clamp according to Claim 5, **characterized in that** the inner diameter (d) of the pipe outlet (8) corresponds approximately to the inner diameter (D) of the pipeline (4).

7. Clamp according to at least one of Claims 1 to 4, **characterized in that** centring devices are formed on the contact faces (1b, 2b), which face towards one another, of the segments (1, 2).

8. Clamp according to Claim 7, **characterized in that** the centring devices are formed as projections (10) and corresponding recesses (11) for holding the projections (10) on the in each case opposite contact face (1b, 2b).

9. Clamp according to at least one of Claims 1 to 8, **characterized in that** the heating device (3) is composed of an elastic plastic material, in particular a thermoplastic material.

## Revendications

1. Bride en matériau thermosoudable pour des conduites (4) à base d'un matériau soudable, avec deux segments (1, 2), qui entourent la conduite (4) sur toute la périphérie dans l'état assemblé et peuvent être fixés l'un sur l'autre au moyen de surfaces d'appui (1b, 2b) tournées l'une vers l'autre, ainsi qu'avec un dispositif de chauffage (3) doté d'au moins un conducteur chauffant (6), lequel dispositif est relié de façon fixe à la surface intérieure (1a) d'un segment (1), le dispositif de chauffage (3) étant relié de façon fixe dans l'état ouvert seulement avec la surface intérieure (1a) uniquement d'un premier segment (1), **caractérisée en ce que** le dispositif de chauffage (3) dépasse des surfaces d'appui (1b) de ce segment (1) dans l'état ouvert des deux côtés en direction de l'autre second segment (2).

2. Bride selon la revendication 1, **caractérisée en ce que** le dispositif de chauffage (3) dépasse des surfaces d'appui (1b) des deux côtés d'au moins 20°.

3. Bride selon la revendication 1 ou 2, **caractérisée en ce que** le dispositif de chauffage (3) entoure dans l'état ouvert au moins 70 %, de préférence 80 % à 90 %, de la périphérie de la conduite (4).

4. Bride selon au moins l'une quelconque des revendications 1 à 3, **caractérisée en ce que** des retraits (9) appropriés pour le logement des zones (3a), dépassant uniquement du premier segment (1), du dispositif de chauffage (3) sont réalisés dans la surface intérieure (2a) du second segment (2) non doté du dispositif de chauffage (3) sensiblement de l'épaisseur du dispositif de chauffage (3).

5. Bride selon au moins l'une quelconque des revendications 1 à 4, **caractérisée en ce que** sur le segment (1) doté du dispositif de chauffage (3) est réalisé un départ de tuyau (8), un évidement (7) correspondant au moins au diamètre intérieur (d) du départ de tuyau (8) étant réalisé dans le dispositif de chauffage (3).

6. Bride selon la revendication 5, **caractérisée en ce que** le diamètre intérieur (d) du départ de tuyau (8) correspond à peu près au diamètre intérieur (D) de la conduite (4).

7. Bride selon au moins l'une quelconque des revendications 1 à 4, **caractérisée en ce que** des dispositifs de centrage sont réalisés sur les surfaces d'appui (1b, 2b), tournées l'une vers l'autre, des segments (1, 2).

8. Bride selon la revendication 7, **caractérisée en ce que** les dispositifs de centrage sont réalisés sur les surfaces d'appui (1b, 2b) respectivement opposées en tant que saillies (10) et évidements (11) correspondants pour le logement des saillies (10).

9. Bride selon au moins l'une quelconque des revendications 1 à 8, **caractérisée en ce que** le dispositif de chauffage (3) est à base d'un matériau plastique élastique, en particulier un matériau thermoplastique.
